(19) Europäisches Patentamt
European Patent Office
Office européen des brevets

(11) Veröffentlichungsnummer: **0 089 479**
**A1**

(12) # EUROPÄISCHE PATENTANMELDUNG

(21) Anmeldenummer: 83101171.3

(22) Anmeldetag: 08.02.83

(51) Int. Cl.³: **B 01 D 59/18**
B 01 D 53/24, C 01 B 3/50

(30) Priorität: 26.02.82 DE 3206821

(43) Veröffentlichungstag der Anmeldung: 28.09.83 Patentblatt 83/39

(84) Benannte Vertragsstaaten: FR GB IT NL SE

(71) Anmelder: **Kernforschungszentrum Karlsruhe GmbH**
**Weberstrasse 5**
**D-7500 Karlsruhe 1(DE)**

(72) Erfinder: **Becker, Erwin, Prof., Dr.**
**Strählerweg 27**
**D-7500 Karlsruhe 41(DE)**

(72) Erfinder: **Ehrfeld, Wolfgang, Dr.**
**Reutestrasse 27**
**D-7500 Karlsruhe 41(DE)**

(72) Erfinder: **Fritz, Wolfgang, Dr.**
**Kronenstrasse 34**
**D-7500 Karlsruhe(DE)**

(72) Erfinder: **Steinhaus, Haral, Dr.**
**Hafenstrasse 19**
**D-4354 Datteln(DE)**

(72) Erfinder: **Bley, Peter, Dr.**
**Luisenstrasse 37**
**D-7514 Eggenstein-Leopoldshafen(DE)**

(54) **Verfahren zur Abtrennung von leichtem Zusatzgas bei Trenndüsenkaskaden.**

(57) Die Anmeldung betrifft ein Verfahren zur Abtrennung von leichtem Zusatzgas am Ende und/oder an den Abstufungsstellen einer Trenndüsenkaskade, die mit einem zu trennenden gas- oder dampfförmigen Stoffgemisch, insbesondere einem Isotopengemisch, und einem leichten Zusatzgas betrieben wird. Die Erfindung beruht auf der überraschenden Erkenntnis, daß Doppelumlenk-Trenndüsen im Vergleich zu Einzelumlenk-Trenndüsen bei der Trennung von $UF_6$ und $H_2$ wesentlich größere Vorteile bieten als bei der Trennung der Uranisotope, für die die Doppelumlenk-Trenndüsen konzipiert wurden. Durch den anmeldungsgemäßen Einsatz einer Doppelumlenk-Trenndüsenstufe als Vorabscheidungstrennstufe (21) in Kombination mit einem Tieftemperaturabscheider (22) läßt sich das Verhältnis von Puffereinstrom zu Produktstrom gegenüber der bisherigen Lösung mit nur geringem Mehraufwand um rund eine Größenordnung herabsetzen. Das Regelproblem bei der Rückspeisung des $UF_6$ aus dem Puffer (26), und die damit verbundene Gefahr von Produktionsverlusten werden dadurch entsprechend vermindert.

Fig. 2

15
22
25
12
24
16
26
21
27
23
13
14

EP 0 089 479 A1

Verfahren zum Abtrennen von leichtem Zusatzgas bei Trenndüsenkaskaden.

Die Erfindung betrifft ein Verfahren zur Abtrennung von leichtem Zusatzgas am Ende und/oder an den Abstufungsstellen einer Trenndüsenkaskade entsprechend dem Oberbegriff von Anspruch 1.

Beim Trenndüsenverfahren zur Trennung gas- oder dampfförmiger Gemische, insbesondere Isotopengemische, wird zur Verbesserung der Wirtschaftlichkeit ein leichtes Zusatzgas im molaren Überschuß verwendet. Das Trenndüsenverfahren hat in dieser Ausführungsform besondere Bedeutung bei der Anreicherung des leichten Uranisotops $^{235}U$ für Kernreaktoren erlangt. Das zu trennende Gemisch besteht dabei aus den isotopen Molekeln $^{235}UF_6$ und $^{238}UF_6$, während als leichtes Zusatzgas gewöhnlich Wasserstoff oder Helium verwendet wird. Zur Vereinfachung der Darstellung wird das Verfahren der Erfindung im folgenden an diesem Beispiel erläutert, wobei als leichtes Zusatzgas Wasserstoff ($H_2$) angenommen wird. Es läßt sich jedoch auch bei anderen zu trennenden Stoffgemischen und anderen leichten Zusatzgasen mit technischem und wirtschaftlichem Erfolg anwenden.

Zur Erzielung der für Leichtwasser-Kernkraftwerke erforderlichen $^{235}U$-Konzentration von etwa 3,2 % müssen mehrere hundert aus Trenndüsen und Kompressoren bestehende Trenndüsenstufen in einer sogenannten Isotopentrennkaskade hintereinandergeschaltet werden. Bei der für die Isotopentrennung optimalen Kaskadenschaltung wird

die unerwünschte Entmischung von $UF_6$ und $H_2$ längs der Isotopentrennkaskade beim Vereinigen der verschiedenen Teilströme automatisch rückgängig gemacht. Am Kopf und an den Abstufungsstellen der Isotopentrennkaskade fällt jedoch ein Überschußstrom an Wasserstoff an, der dort in einer sogenannten $UF_6$-Abscheidungsanlage abgetrennt und der Isotopentrennkaskade an passenden Stellen wieder zugeführt werden muß. Da sich die Mischungsverhältnisse der Uranisotope an den Abtrennungs- und Zuführungsstellen stark unterscheiden, darf der rezyklierte Wasserstoff praktisch kein $UF_6$ enthalten. Ein Restgehalt von einigen ppm $UF_6$ kann bei einer technischen Anlage bereits einen Produktionsverlust von angereichertem Uran in der Größenordnung von einigen Prozent ausmachen.

Nachdem sich die Trennung von $UF_6$ und $H_2$ durch eine aus 8 - 10 Trenndüsenstufen bestehenden Gastrennkaskade als zu aufwendig erwiesen hatte (KfK-Bericht 1437, Kernforschungszentrum Karlsruhe, Juli 1971), wurde für die Abtrennung des Wasserstoffs eine Kombination aus nur einer Trenndüsenstufe zur Vorabscheidung ("Vorabscheidungstrennstufe ") und einem System von umschaltbaren Tieftemperatur-Gegenstromabscheidern ("Tieftemperaturabscheider") vorgesehen. Eine Verstopfung der Tieftemperaturabscheider durch ausgefrorenes festes $UF_6$ soll dabei durch eine rechnergesteuerte Zuführung des Kältemittels verhindert werden (DP 26 54 249.2). In einer neueren Veröffentlichung wird für diesen Zweck eine automatische Steuerung der Kältemittelzufuhr durch den Druckabfall am Tieftemperaturabscheider vorgesehen (KfK-Bericht 3196, Kernforschungszentrum Karlsruhe, Juli 1981).

Die Vorabscheidungstrennstufe gibt bei der bisherigen Lösung etwa 70 % des in dem $H_2$-Überschußstrom enthaltenen $UF_6$-Stromes kontinuierlich an den Kopf bzw. die Abstufungsstelle der Isotopentrennkaskade zurück. Die restlichen 30 % werden in den Tieftemperaturabscheidern ausgefroren und fallen in den Aufheizungsphasen diskontinuierlich an. Das aus den Tieftemperaturabscheidern stammende $UF_6$ muß daher in einem $UF_6$-Puffer zwischengespeichert und geregelt in die Isotopentrennkaskade zurückgespeist werden. Dem Puffer am Kaskadenkopf wird gleichzeitig der "Produktstrom" entnommen, der im Sollzustand genau der Differenz zwischen Puffereinstrom und Pufferausstrom entspricht. Diese Pufferströme sind bei der bisherigen Lösung um den Faktor 50 - 100 größer als der Produktstrom. Daher führen relativ kleine Schwankungen dieser Pufferströme -sofern sie nicht korreliert sind- zu relativ großen Änderungen der Differenz zwischen Puffereinstrom und Pufferausstrom. Diese Differenz stellt den der Kaskade am Kaskadenkopf effektiv entnommenen Strom dar. Aufgrund des hohen Verhältnisses der Pufferströme zum Produktstrom führen somit selbst kleine Schwankungen dieser Pufferströme (z.B. 1 %), wie sie in der Praxis kaum vermieden werden können, zu relativ großen Schwankungen des Verhältnisses zwischen dem der Kaskade effektiv entnommenen Strom und dem Produktstrom (z.B. 50 - 100 %). Solche Schwankungen können erfahrungsgemäß wegen der damit verbundenen Isotopenvermischungen zu erheblichen Verlusten in der mittleren Produktionsleistung der Anlage führen. Es ergab sich daher die Aufgabe, das Verhältnis von Puffereinstrom zu Produktstrom mit vertretbarem Aufwand deutlich herabzusetzen bzw. den Puffer gegebenenfalls mit vertretbarem Aufwand ganz zu vermeiden.

Die Aufgabe wird erfindungsgemäß mittels des kennzeichnenden Merkmals des Anspruches 1 gelöst.

Die weiteren Ansprüche geben vorteilhafte Weiterbildungen und Ausführungsbeispiele der Erfindung wieder.

Sowohl für die Vorabscheidungstrennstufe als auch für die Gastrennkaskade wurden bisher ausschließlich sogenannte Einzelumlenk-Trenndüsen vorgesehen, wie sie z.B. in DE-PS 11 98 328 beschrieben sind. Dagegen wurden sogenannte Doppelumlenk-Trenndüsen, deren Funktion aus DE-PS 22 43 730 hervorgeht, für diesen Zweck bisher nicht in Erwägung gezogen.

Bei der Trennung der Uranisotope, für die die Doppelumlenk-Trenndüsen konzipiert wurden, sind durch den Übergang von Einzel- zu Doppelumlenk-Trenndüsen Einsparungen beim spezifischen Energieverbrauch und bei den Komponentenkosten in der Größenordnung von 10 - 20 % zu erwarten (vgl. Z. Naturforschg., 32a, 401 - 410 (1977)). Diesen Vorteilen stehen aber bei Doppelumlenk-Trenndüsen deutlich höhere Trennelementkosten gegenüber, was dazu geführt hat, daß Doppelumlenk-Trenndüsen bisher noch keine technische Anwendung gefunden haben. Bei den bekanntgewordenen Plänen für zukünftige Trenndüsenanlagen werden Doppelumlenk-Trenndüsen zwar für die eigentliche Isotopentrennkaskade ernsthaft in Erwägung gezogen. Es sind aber auch in diesem Zusammenhang keine Vorschläge für den Einsatz von Doppelumlenk-Trenndüsen bei der Abtrennung des leichten Zusatzgases am Kopf und/oder den Abstufungsstellen der Isotopentrennkaskade bekannt geworden.

Die Erfindung beruht auf der überraschenden Erkennnis, daß Doppelumlenk-Trenndüsen im Vergleich zu Einzelumlenk-Trenndüsen bei der Trennung von $UF_6$ und $H_2$ wesentlich größere Vorteile bieten als bei der Trennung der Uranisotope, für die die Doppelumlenk-Trenndüsen konzipiert wurden.

Durch den erfindungsgemäßen Einsatz einer Doppelumlenk-Trenndüsenstufe als Vorabscheidungstrennstufe in Kombination mit einem Tieftemperaturabscheider läßt sich das Verhältnis von Puffereinstrom zu Produktstrom gegenüber der bisherigen Lösung mit nur geringem Mehraufwand um rund eine Größenordnung herabsetzen. Das Regelproblem bei der Rückspeisung des $UF_6$ aus dem Puffer und die damit verbundene Gefahr von Produktionsverlusten werden dadurch entsprechend vermindert.

Durch den erfindungsgemäßen Einsatz mehrerer hintereinandergeschalteter Doppelumlenk-Trenndüsenstufen in Form einer Gastrennkaskade wird der $UF_6$-Puffer ganz vermieden, was regelungstechnisch die beste Lösung ist. Bei Trenndüsenanlagen, die mit besonders kleinen charakteristischen Abmessungen der Trenndüsen und entsprechend hohem Gasdruck arbeiten (vgl. z.B. DE-PS 29 22 642) können durch erfindungsgemäße Verwendung einer aus Doppelumlenk-Trenndüsenstufen bestehenden Gastrennkaskade darüberhinaus die Investierungs- und Betriebskosten der $UF_6$-Abscheidungsanlage im Vergleich zur bisherigen Lösung abgesenkt werden.

Bei der Abtrennung von leichtem Zusatzgas wird in den dazu verwendeten Trenndüsenstufen auch eine Verschiebung der Isotopenhäufigkeiten erzielt, während in den Tieftemperaturabscheidern ein solcher Effekt nicht auftritt. Da bei dem erfindungsgemäßen Einsatz von Doppelumlenk-Trenndüsenstufen die Abtrennung des leileichten Zusatzgases in wesentlich verstärktem Maße oder gänzlich von den Trenndüsenstufen übernommen wird, liefert eine nach dem Verfahren der Erfindung arbeitende $UF_6$-Abscheidungsanlage eine wesentlich größere Isotopenhäufigkeitsverschiebung als die bisherige Anordnung. Der Effekt läßt sich durch die in den Kennzeichen der Ansprüche 4 bzw. 4 und 5 beschriebenen Maßnahmen zur Einsparung einer nicht unerheblichen Zahl von Trenndüsenstufen der Isotopentrennkaskade ausnutzen.

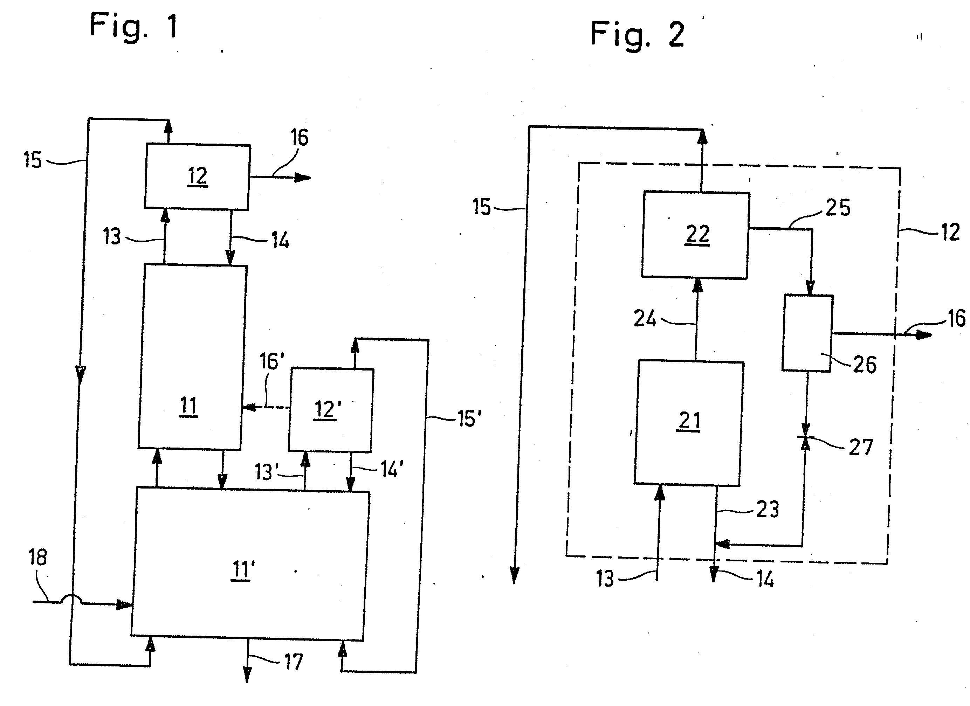

Die Erfindung wird im folgenden anhand der Figuren 1 bis 7, sowie zweier Ausführungsbeispiele näher erläutert.

Das Schema einer mit 2 Stufengrößen aufgebauten, d.h. mit einer Abstufungsstelle arbeitenden Trenndüsenkaskade ist in Fig. 1 dargestellt. Die beiden Stufengrößen werden im folgenden mit "klein" bzw. "groß" bezeichnet. Es bedeutet 11 eine aus zahlreichen kleinen in Serie geschalteten Trenndüsenstufen bestehende sogenannte kleine Isotopentrennkaskade. 12 ist eine $UF_6$-Abscheidungsanlage, die über 13 das am Kopf von 11 anfallende $H_2/UF_6$-Gemisch erhält. 12 gibt über 14 ein stark an $UF_6$ angereichertes Gemisch an den Kopf von 11 und über 15 praktisch reinen $H_2$ an den Fuß der sogenannten großen Isotopentrennkaskade 11' zurück. 12' ist eine zweite $UF_6$-Abscheidungsanlage, die über 13' das am Kopf von 11', d.h. an der Abstufungsstelle anfallende, von 11 nicht übernommene $H_2/UF_6$-Gemisch erhält. 12' gibt über 14' ein stark an $UF_6$ angereichertes Gemisch an den Kopf von 11' und über 15' praktisch reinen $H_2$ an den Fuß von 11' zurück. 16 ist der Produktstrom, 17 der Abfallstrom und 18 der Ausgangsmaterialstrom.

Das Schema einer mit Vorabscheidungstrennstufe und umschaltbaren Tieftemperaturabscheidern arbeitenden $UF_6$-Abscheidungsanlage geht aus Fig. 2 hervor:

Der entsprechend Fig. 1 von der Isotopentrennkaskade 11 bzw. 11' kommende $H_2/UF_6$-Gemischstrom 13 bzw. 13' wird von der Vorabscheidungstrennstufe 21 in einen an $UF_6$ angereicherten Strom 23 und einen an $UF_6$ verarmten Strom 24 zerlegt. Der Tieftemperaturabscheider 22 teilt den Strom 24 in praktisch reines $UF_6$ 25 und praktisch reinen Wasserstoff 15 auf. Der $UF_6$-Strom 25 wird nach einer Zwischenspeicherung in dem $UF_6$-Puffer 26, nach Abzug des Produktstromes 16, über das Regelventil 27 mit dem Strom 23 vereinigt. Der so gebildete stark $UF_6$-haltige Strom 14 wird, wie in Fig. 1 gezeigt, als Strom 14 an den Kopf der kleinen 11 bzw. als 14' an den Kopf der großen Isotopentrennkaskade 11' zurückgeführt. Der reine $H_2$-Strom wird als Strom 15 bzw. 15', wie in Fig. 1 gezeigt, am Fuß der Isotopentrennkaskade 11' eingespeist. Der Produktstrom 16 wird dem $UF_6$Puffer 26 entnommen.

Die Prinzipien der nach der bisherigen Methode mit Einzelumlenk-Trenndüsen bzw. erfindungsgemäß mit Doppelumlenk-Trenndüsen arbeitenden Vorabscheidungstrennstufen 21 (Fig. 2) sind in den Figuren 3 und 4 gegenübergestellt:
Die von der Isotopentrennkaskade kommenden $H_2/UF_6$-Gemischströme 13 werden durch Verdichter 31 bzw. 41 verdichtet und den Trenndüsen zugeführt. Die leichten Fraktionen 32 bzw. 42 der Trenndüsen werden in beiden Fällen aus den Stufen herausgeleitet und als Strom 24 dem Tieftemperaturabscheider 22 (Fig. 2) zugeführt. Während die schwere Fraktion 33 der Einzelumlenk-Trenndüse die Stufe als an $UF_6$ angereicherter Strom 23 verläßt, wird die schwere Fraktion 43 der ersten Düse der Doppelumlenk-Trenndüse einer erneuten Trennung unterworfen, wodurch eine mittlere Fraktion 44 und eine besonders schwere Fraktion 45 entstehen. 45 verläßt die Stufe als an $UF_6$ besonders stark angereicherter Strom 23, während 44 innerhalb der Stufe auf die Ansaugseite des Verdichters 41 zurückgeführt wird. Die speziellen Arbeitsbedingungen der Doppelumlenk-Trenndüsenstufe werden durch das

$$\text{Zirkulationsverhältnis } Z = \frac{\text{Molstrom } 44}{\text{Molstrom } 13}$$

beschrieben. Es kann u.a. durch die Position des Abschälers 46 eingestellt werden.

Mit den $UF_6$-Molenbrüchen $N_o$ und $N_L$ des in die Stufe eintretenden Gasstromes 13 bzw. die Stufe verlassenden Gasstromes 24 wird der

$$\text{Gasanreicherungsfaktor } \alpha = \frac{N_o(1 - N_L)}{N_L(1 - N_o)}$$

definiert. Daneben ist noch das

$$\text{Zusatzgas- oder } H_2\text{-Aufteilungsverhältnis } \Theta_Z = \frac{H_2\text{Strom in } 24}{H_2\text{Strom in } 13}$$

von Bedeutung.

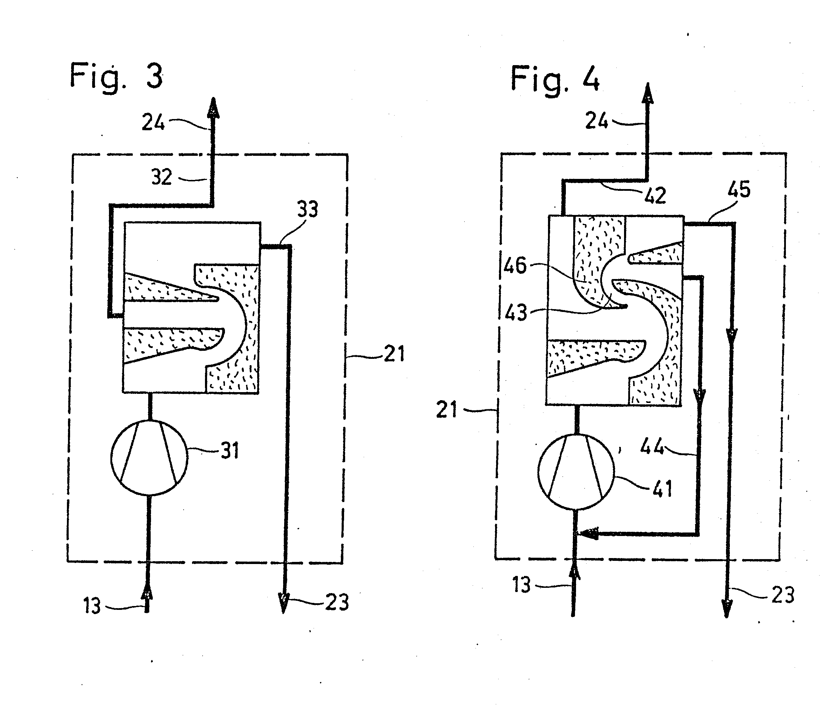

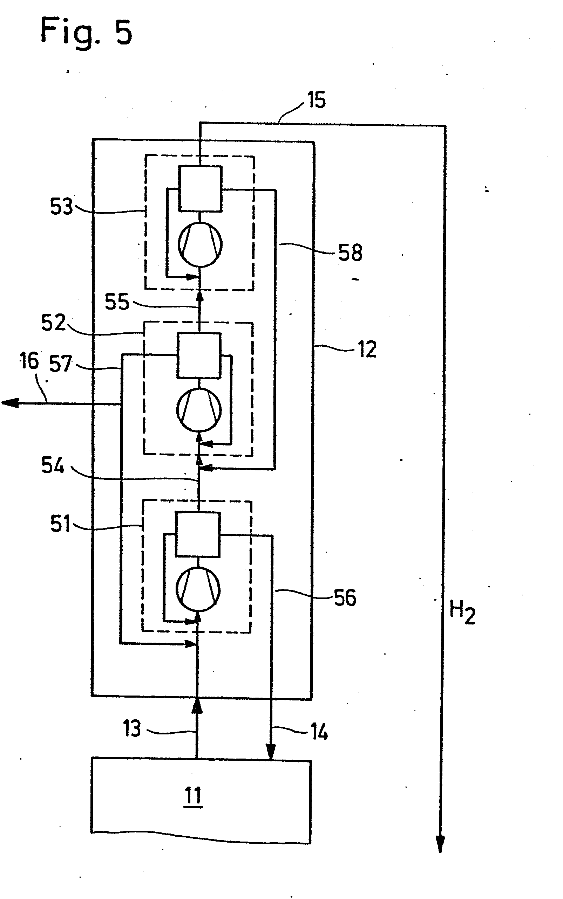

Das Prinzip einer erfindungsgemäß ausschließlich aus Doppelumlenk-Trenndüsenstufen bestehenden $UF_6$-Abscheidungsanlage ("Gastrennkaskade") geht aus Fig. 5 hervor. Darin bedeuten 51, 52 und 53 Doppelumlenk-Trenndüsenstufen. Der in Fig. 4 mit 24 bezeichneten leichten Fraktion der Doppelumlenk-Vorabscheidungstrenndüsenstufe entsprechen in Fig. 5 die leichten Fraktionen 54, 55 und 15 der drei in Serie geschalteten Doppelumlenk-Trenndüsenstufen der Gastrennkaskade. Der in Fig. 4 mit 45 bezeichneten schweren Fraktion entsprechen in Fig. 5 die schweren Fraktionen 56, 57 und 58. Der in Fig. 4 mit 41 bezeichnete Kompressor und die mit 44 bezeichnete mittlere Fraktion sind in den in Fig. 5 dargestellten Doppelumlenk-Trenndüsenstufen ohne Bezeichnung als solche zu erkennen.

Bei Verwendung der Gastrennkaskade als $UF_6$-Abscheidungsanlage 12 am Kopf der Kaskade 11 (Fig. 1) wird der Produktstrom 16 zweckmäßig, wie in Fig. 5 zeigt, der schweren Fraktion 57 der der Eingangstrenndüsenstufe 51 nachgeschalteten Trenndüsenstufe 52 der Gastrennkaskade entnommen. Auf diese Weise wird die von der Trenndüsenstufe 51 neben der Gastrennung bewirkte Anreicherung des $^{235}U$ ausgenutzt, ohne daß dem Produktstrom ein untragbar hoher Strom an $H_2$ beigemischt wäre. Wenn die Gastrennkaskade aus mehr Stufen als in Fig. 5 besteht, kann es zweckmäßig sein, den Produktstrom der schweren Fraktion einer der Eingangstrenndüsenstufe nachgeschalteten, weiter entfernt liegenden Trenndüsenstufe der Gastrennkaskade zu entnehmen.

Bei Verwendung der Gastrennkaskade als $UF_6$-Abscheidungsanlage 12' (Fig. 1) am Kopf der Kaskade 11' ist zwar eine Produktentnahme im allgemeinen nicht vorgesehen. Die von der Trenndüsenstufe 51 (Fig. 5) bewirkte Anreicherung des $^{235}U$ kann jedoch auch in diesem Fall ausgenutzt werden, indem der in Fig. 5 mit 16 bezeichnete $UF_6$-haltige Teilstrom 16' (Fig. 1) in den produktseitigen Kaskadenabschnitt 11 an derjenigen Stelle eingespeist wird, an der die $^{235}U$-Gehalte des $UF_6$ im Teilstrom und im Kaskadenabschnitt nach der Zusammenführung weitgehend übereinstimmen.

Wenn die $UF_6$-Abscheidungsanlage 12' (Fig. 1) am Kopf der Kaskade 11' entsprechend Fig. 2 aus einer Kombination von Vorabscheidungstrennstufe 21 und Tieftemperaturabscheider 22 besteht, läßt sich die von der Vorabscheidungstrennstufe bewirkte Anreicherung des $^{235}U$ in analoger Weise wie bei der Gastrennkaskade ausnutzen.

Beispiel 1

Bei einer im Bau befindlichen technischen Trenndüsenanlage besteht die $UF_6$-Abscheidungsanlage 12 entsprechend Fig. 2 aus einer Vorabscheidungstrennstufe 21 und einem Tieftemperaturabscheider 22. Die Vorabscheidungstrennstufe ist eine Einzelumlenk-Trenndüsenstufe entsprechend Fig. 3. Bei einer für die Zukunft vorgesehenen Verdoppelung der Produktionsleistung der Trenndüsenanlage durch Druckerhöhung soll der $UF_6$-Einstrom in die vorhandenen Tieftemperaturabscheider nicht nur nicht erhöht, sondern nach Möglichkeit abgesenkt werden, um das mit der Rückspeisung des $UF_6$ aus dem Puffer 26 verbundene oben beschriebene Regelproblem zu entschärfen. Die Aufgabe wurde erfindungsgemäß dadurch gelöst, daß die bisher verwendete Einzelumlenk-Vorabscheidungstrennstufe durch eine Doppelumlenk-Vorabscheidungstrennstufe ersetzt wurde.

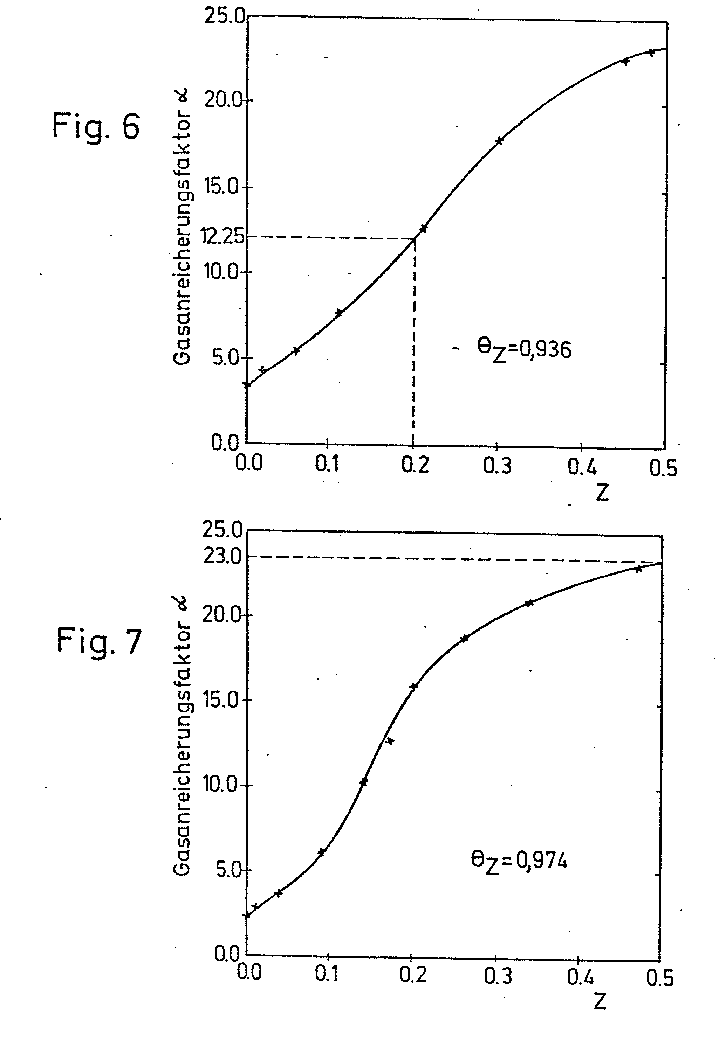

Die überraschend starke Verbesserung der Gastrennung durch Übergang von Einzel- auf Doppelumlenk-Trenndüsen kann im vorliegenden Fall aus Fig. 6 entnommen werden, in welcher der experimentell bestimmte Gasanreicherungsfaktor $\alpha$ über dem Zirkulationsverhältnis Z aufgetragen ist. Das $H_2$-Aufteilungsverhältnis wurde dabei, den Anforderungen der speziellen Isotopentrennkaskade 11 entsprechend auf $O_Z = 0{,}936$ eingestellt. Der $UF_6$-Molenbruch im Gasstrom 13 (Fig. 3 bzw. 4) betrug 1,0 %, das an den Düsen anliegende Expansionsverhältnis war 2. Aus Fig. 6 ist zu entnehmen, daß bei Z = 0, d.h. beim Betrieb der Vorabscheidungstrennstufe mit einer Einzelumlenk-Trenndüse entsprechend Fig. 3, unter den vorliegenden Bedingungen ein Gasanreicherungsfaktor $\alpha = 3{,}5$ erreicht wird. Würde man zur Verminderung des in den Tieftemperaturabscheider eintretenden $UF_6$-Stromes zwei Einzelumlenk-Trenndüsenstufen mit demselben Trennfaktor hintereinanderschalten, würde sich ein Gasanreicherungsfaktor $3{,}5^2 = 12{,}25$ ergeben. Man entnimmt Fig. 6, daß dieser Gasanreicherungsfaktor 12,25 mit nur einer Trenndüsenstufe erreicht wird, wenn man sie mit Doppelumlenk-Trenndüsen entsprechend Figur 4 ausrüstet und diese bei einem Zirkulationsverhältnis Z = 0,2 betreibt. Bei Berücksichtigung der Tatsache, daß eine Doppelumlenk-Trenndüsenstufe bei Z = 0,2 einen um 20 % höheren Kompressordurchsatz und daher auch eine um 20 % höhere Antriebsleistung hat als eine Einzelumlenk-Trenndüsenstufe ergibt sich bei der Realisierung des Gasanreicherungsfaktors 12,25 mit einer Doppelumlenk-Trenndüsenstufe statt mit einer Einzelumlenk-Trenndüsenstufe eine Energieeinsparung von etwa 40 %. Sie ist überraschenderweise doppelt so hoch wie die maximale bisher bekannt gewordene Energieeinsparung bei der Verwendung von Doppelumlenk-Trenndüsenstufen für die Trennung der Uranisotope (vgl. DE-PS 22 43 730).

Da ein um 20 % größerer Verdichter jedoch nur etwa 10 % teuerer wird (hierbei wurde wie im Apparatebau üblich ein Anstieg der Kosten proportional zur Quadratwurzel der Größe angenommen) ergeben sich durch den Einsatz der Doppelumlenk-Trenndüsen Einsparungen an Investitionskosten für die Verdichter samt Zubehör von etwa 45 %.

Bei der notwendigen Trennelementschlitzlänge ergibt sich - wie beim Energieverbrauch - eine Einsparung von etwa 40 %. Bei den Investitionskosten ist jedoch zu berücksichtigen, daß Doppelumlenk-Trenndüsen aufgrund der komplizierteren Struktur teuerer sind als Einzelumlenk-Trenndüsen. Nimmt man für Doppelumlenk-Trenndüsen den doppelten Preis pro Meter Schlitzlänge an, was nach Studien über Trennelementherstellungskosten gerechtfertigt erscheint, so ergibt sich hier eine Mehrinvestition von 20 % für die Doppelumlenk-Trenndüsen.

Dieser Nachteil bei den Investitionskosten für die Trenndüsen wird jedoch durch die oben aufgezeigten Vorteile bei den Investitionskosten für die Verdichter und die Energieeinsparung bei weitem überkompensiert, so daß sich durch den Einsatz von Doppelumlenk-Trenndüsen im Rahmen der gestellten Aufgabe ein deutlicher technischer und wirtschaftlicher Vorteil ergibt.

Beispiel 2

Bei einer geplanten kommerziellen Trenndüsenanlage, die mit besonders kleinen charakteristischen Abmessungen der Trenndüsen und entsprechend hohem Gasdruck arbeiten wird (vgl. DE-PS 29 22 642), sollten aus regelungs- und betriebstechnischen Gründen Tieftemperaturabscheider am Kopf und an der Abstufungsstelle der mit 2 Stufengrößen aufgebauten Isotopentrennkaskade nach Möglichkeit vermieden werden.

Die bisher in diesem Zusammenhang ausschließlich in Erwägung gezogenen Gastrennkaskaden mit Einzelumlenk-Trenndüsenstufen erwiesen sich auch im vorliegenden Fall als viel zu aufwendig. Die Aufgabe wurde erfindungsgemäß dadurch gelöst, daß Gastrennkaskaden mit Doppelumlenk-Trenndüsenstufen vorgesehen wurden. Der Erfolg dieser Maßnahme wird im folgenden näher erläutert:

Die Verbesserung der Gastrennung durch Übergang von Einzel- auf das Doppelumlenk-Trenndüsen kann im vorliegenden Fall aus Fig. 7 entnommen werden, in der wieder der experimentell bestimmte Gasanreicherungsfaktor $\alpha$ über dem Zirkulationsverhältnis Z aufgetragen ist. Das $H_2$-Aufteilungsverhältnis wurde dabei jedoch, den erhöhten Anforderungen der kommerziel-

len Anlage entsprechend auf $\Theta_Z=0,974$ eingestellt. Bei $Z=0$, d.h. für eine Einzelumlenk-Trenndüse entsprechend Fig. 3, ergibt sich jetzt, trotz des gegenüber Fig. 6 von 2 auf 3, erhöhten Expansionsverhältnisses nur ein Gasanreicherungsfaktor $\alpha=2,35$. Mit einer Doppelumlenk-Trenndüse entsprechend Fig. 4 wird dagegen bei einem Zirkulationsverhältnis $Z=0,5$ ein Gasanreicherungsfaktor $\alpha=23$ erreicht.

Da der $UF_6$-Restgehalt der in die Isotopentrennkaskade 11' (Fig. 1) zurückzuspeisenden $H_2$-Ströme 15 bzw. 15' kleiner als 1 ppm sein soll, während er in den vom Kopf bzw. von der Abstufungsstelle der Isotopentrennkaskade kommenden Ströme 13 bzw. 13' etwa 1 Mol% beträgt, müssen die Gastrennkaskaden einen Gesamtanreicherungsfaktor $= \alpha_G = 12\,000$ liefern. Nach der Beziehung

$$\alpha_G = \alpha^n$$

ergibt sich als erforderliche Stufenzahl n einer mit Einzelumlenk-Trenndüsen ($\alpha=2,35$) arbeitenden Gastrennkaskade der Wert

$$n = 11.$$

Beim Einsatz von Doppelumlenk-Trenndüsen mit $Z=0,5$ werden dagegen wegen $\alpha=23$ nur

$$n = 3$$

Stufen benötigt.

Der Aufbau der Gastrennkaskaden entspricht Fig. 5. Durch die Stufe 51 wird im vorliegenden Fall die $UF_6$ Konzentration von 1 Mol% in Strom 13 auf 0,044 Mol% in Strom 54 abgesenkt. Die Stufe 52 setzt den $UF_6$-Gehalt im Strom 55 auf 0,001 Mol% herab. In dem die Stufe 53 verlassenden Strom 15 wird schließlich eine Endkonzentration von 0,000082 Mol% $UF_6$ erreicht, die unterhalb der geforderten oberen Grenze von 1 ppm $UF_6$ liegt.

Beim Vergleich des Energieverbrauchs der Gastrennkaskaden mit Doppel- und Einzelumlenk-Trenndüsen ist außer der Stufenzahl die Tatsache zu berücksichtigen, daß Doppelumlenk-Trenndüsenstufen bei Z=0,5 einen um 50 % höheren Kompressordurchsatz und daher eine um 50 % höhere Antriebsleistung haben als Einzelumlenk-Trenndüsenstufen. Insgesamt ergibt sich beim Übergang vom Einzel- zu Doppelumlenk-Trenndüsen im 2. Beispiel eine Energieeinsparung um mindestens 60 %, die also noch bedeutend höher als im 1. Beispiel ist.

Beim Zirkulationsverhältnis Z=0,5 wird das Ansaugvolumen der Verdichter um 50 % erhöht, so daß in diesem Fall ein Verdichter für Doppelumlenk-Trenndüsenstufen etwa 23 % teurer wird als ein Verdichter für Einzelumlenk-Trenndüsenstufen (Kostendegression wie in Beispiel 1 vorausgesetzt). Da jedoch nur 3 statt 11 Verdichter pro Gastrennkaskade benötigt werden, ergibt sich bei den Investitionskosten für die Verdichter samt Zubehör durch die Verwendung von Doppelumlenk-Trenndüsen eine Einsparung von 66 %.

Nimmt man - wie im Beispiel 1 - einen doppelten Preis pro Meter Trenndüsenschlitz bei Doppelumlenk-Trenndüsen im Vergleich zu Einzelumlenk-Trenndüsen an, so ergibt sich im vorliegenden Beispiel auch bei den Investitionskosten für die Trenndüsen eine Einsparung und zwar in Höhe von etwa 18 %.

Die Einsparung von mehr als 50 % in den Energiekosten und in der Summe der Investitionskosten einer Gastrennkaskade beim Übergang von Einzel- zu Doppelumlenk-Trenndüsen machen die mit Doppelumlenk-Trenndüsenstufen arbeitende Gastrennkaskade im vorliegenden Fall, wie ein genauer Kostenvergleich zeigt, der bisherigen Lösung nicht nur technisch, sondern auch wirtschaftlich überlegen.

Bei Verwendung der im Beispiel 2 betrachteten Gastrennkaskade als $UF_6$-Abscheidungsanlage 12 am Kopf der kleinen Isotopentrenn-Kaskade 11 (Fig. 1) wird der Produktstrom 16 erfindungsgemäß, wie in Fig. 5 gezeigt, der schweren Fraktion 57 der mittleren Trenndüsenstufe 52 entnommen. Ist für den Produktstrom 16 beispielsweise eine $^{235}U$-Konzentration von 3,000 % vorgeschrieben, so braucht der Eingangsstrom 13 nur eine $^{235}U$-Konzentration von 2,867 % zu haben. Durch die erfindungsgemäße Ausnutzung der $^{235}U$-Anreicherung der Gastrennkaskade werden in diesem Fall etwa 5 Trenndüsenstufen der kleinen Isotopentrennkaskade 11 eingespart.

Daß dem auf diese Weise entnommenen Produktstrom 16 kein untragbar hoher Strom an $H_2$ beigemischt ist, erkennt man folgendermaßen:

Der in dem Strom 16 enthaltene $UF_6$-Strom ist unter optimalen Bedingungen 70 mal kleiner als der in die $UF_6$-Abscheidungsanlage mit dem Gasstrom 13 eintretende $UF_6$-Strom. Da der $UF_6$-Molenbruch in 16 außerdem um den Faktor 1,6 größer als der in 13 ist, folgt, daß mit dem Strom 16 weniger als 1/100 des in die Gastrennkaskade eintretenden $H_2$-Strom entnommen werden. Dieser relativ kleine $H_2$-Strom läßt sich mit geringem Aufwand durch einen Tieftemperaturabscheider vom $UF_6$-Produktstrom trennen und in die Isotopentrennkaskade zurückspeisen.

Bei Verwendung der im Beispiel 2 betrachteten Gastrennkaskade als $UF_6$-Abscheidungsanlage 12' am Kopf der großen Isotopentrenn-Kaskade 11' (Fig. 1), d.h. an der Abstufungsstelle, wird der in Fig. 5 mit 16 bezeichnete Strom erfindungsgemäß als Strom 16' in den produktseitigen Kaskadenabschnitt, d.h. in die kleine Isotopentrennkaskade 11 (Fig. 1) unter Umgehung von neun an die Abstufungsstelle anschließenden Trenndüsenstufen eingeführt. Wie die Rechnung zeigt, werden durch die erfindungsgemäße Ausnutzung der $^{235}U$-Anreicherung der Gastrennkaskade an der Abstufungsstelle fünf weitere Stufen der kleinen Isotopentrennkaskade 11 eingespart. Eine Abtrennung des $H_2$ aus dem Strom 16' ist nicht erforderlich, da der $H_2$-Strom in 16' nur wenige Prozent des $H_2$-Stromes in der kleinen Isotopentrennkaskade 11 beträgt.

0089479



Kernforschungszentrum
Karlsruhe GmbH

Karlsruhe, 27.1.1983
PLA 8215 Ga/hr

Patentansprüche:

1. Verfahren zur Abtrennung von leichtem Zusatzgas am Ende und/oder an den Abstufungsstellen einer Trenndüsenkaskade, die mit einem zu trennenden gas- oder dampfförmigen Stoffgemisch und einem leichten Zusatzgas betrieben wird, wobei die Abtrennung des leichten Zusatzgases unter Verwendung von Trenndüsenstufen durchgeführt wird, dadurch gekennzeichnet, daß als Trenndüsenstufen für die Abtrennung des leichten Zusatzgases Doppelumlenk-Trenndüsenstufen verwendet werden.

2. Verfahren nach Anspruch 1, dadurch gekennzeichnet, daß als Trenndüsenstufe für die Abtrennung des leichten Zusatzgases eine Doppelumlenk-Trenndüsenstufe als mit einem Tieftemperaturabscheider kombinierte Vorabscheidungstrennstufe verwendet wird.

3. Verfahren nach Anspruch 1, dadurch gekennzeichnet, daß die für die Abtrennung des leichten Zusatzgases verwendeten Trenndüsenstufen in Form einer Gastrennkaskade aus mehreren hintereinandergeschalteten Doppelumlenk-Trenndüsenstufen vorliegen.

4. Verfahren nach einem der Ansprüche 1 bis 3, dadurch gekennzeichnet, daß an mindestens einer Abstufungsstelle der Trenndüsenkaskade einer Abstufungsstelle der Trenndüsenkaskade bei der Abtrennung des leichten Zusatzgases ein das zu trennende Stoffgemisch enthaltender Teilstrom (16') entnommen und in den produktseitigen Kaskadenabschnitt (11) an derjenigen Stelle eingespeist wird, an der die Zusammensetzung des zu trennenden Stoffgemisches im Teilstrom (16') und im Kaskadenabschnitt (11) nach der Zusammenführung weitgehend übereinstimmen.

5. Verfahren nach Anspruch 3 und/oder 4, dadurch gekennzeichnet, daß bei der Abtrennung des leichten Zusatzgases unter Verwendung einer Gastrennkaskade aus mehreren hintereinandergeschalteten Doppelumlenk-Trenndüsenstufen der Produktstrom (16) und/oder die Teilströme (16') der schweren Fraktion einer der Eingangstrenndüsenstufe (5') nachgeschalteten Trenndüsenstufe der Gastrennkaskade entnommen werden.

Fig. 1
Fig. 2
15
12
16
13
14
11
16'
12'
15'
13'
14'
18
11'
17
22
25
24
26
21
27
23



0089479

Fig. 4
24
42
45
44
41
46
43
21
23
13
Fig. 3
24
32
33
31
21
23
13

Fig. 5

15
53
58
55
52
12
16
57
54
51
56
H2
13
14
11

Fig. 6
Gasanreicherungsfaktor α
25.0
20.0
15.0
12.25
10.0
5.0
0.0
0.0
0.1
0.2
0.3
0.4
0.5
Z
θZ=0,936
Fig. 7
Gasanreicherungsfaktor α
25.0
23.0
20.0
15.0
10.0
5.0
0.0
0.0
0.1
0.2
0.3
0.4
0.5
Z
θZ=0,974

Europäisches Patentamt

# EUROPÄISCHER RECHERCHENBERICHT

0089479
Nummer der Anmeldung

EP 83 10 1171

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-3 877 892 (P. BLEY et al.) * Ansprüche 1-5; Spalte 5, Zeilen 13-19; figur 1 *& DE-C-2 243 730 (Kat. D,X) | 1 | B 01 D 59/18<br>B 01 D 53/24<br>C 01 B 3/50 |
| | --- | | |
| A | NUCLEAR TECHNOLOGY, Band 52, Januar 1981, Dauville, Illinois, USA E.W. BECKER et al. "Uranium enrichment by the separation nozzle method within the framework of German/Brazilian cooperation", Seiten 105-114 * Seite 107, rechte Spalte, Zeile 3 - Seite 108, Zeile 11; Figur 6 * | 1-5 | |
| | ----- | | |
| | | | RECHERCHIERTE SACHGEBIETE (Int. Cl. 3) |
| | | | B 01 D 53/00<br>B 01 D 59/00 |

Der vorliegende Recherchenbericht wurde für alle Patentansprüche erstellt.

| Recherchenort | Abschlußdatum der Recherche | Prüfer |
|---|---|---|
| BERLIN | 20-06-1983 | BERTRAM H E H |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82